# EUROPEAN PATENT SPECIFICATION

(11) **EP 2 648 053 B1**
(45) Date of publication and mention of the grant of the patent: **27.05.2015**
(21) Application number: 12163272.3
(22) Date of filing: 05.04.2012
(51) Int. Cl.: G05B 9/02, G05B 19/042

(54) **Emergency management system and method therefor**
Notfallmanagementsystem und Verfahren dafür
Système de gestion d'urgence et procédé associé

(43) Date of publication of application: 09.10.2013
(73) Proprietor: Siemens Aktiengesellschaft, 80333 München (DE)
(72) Inventor: Douglas, Antony Louis Piriyakumar, 560047 Bangalore (IN); Gopalakrishnan, Pradeep Kumar, 560103 Bangalore (IN); Mishra, Anant Kumar, 560050 Bangalore (IN); Venkateswaran, Sornam Vishwanathan, 560084 Bangalore (IN)

(56) References cited:
- DE-B3-102010 037 714
- FR-A1- 2 769 385
- US-A1- 2011 098 829

## Description

The present invention generally relates to emergency management systems. More specifically, the present invention relates to an emergency management system and a method therefor suitable for use in conveyor systems.

Conveyor systems are widely used for transporting articles or materials in various industrial applications related to manufacturing, processing or packaging. Such systems are particularly advantageous in mining, metal manufacturing, baggage handling, pharmaceutical, and auto ancillaries industries.

A typical conveyor system includes a conveyor belt that is rotated around a series of rollers such that articles or materials placed on the conveyor belt are transported from one location to another. At the same time, other implementations, such as those based on movable slats, are also commonly used.

In several cases, the conveyor system represents a cooperative work environment wherein human beings such as plant personnel, operators, and so on, work in close vicinity of high power machines. Evidently, the conveyor systems pose an inherent threat to life safety. Serious injuries and/or loss of life may occur if an operator, plant personnel, or any other life form in close vicinity of the conveyor systems gets inadvertently caught therein. This problem is particularly aggravated in case of the conveyor systems extending over long distances in an open environment.

Accordingly, it is imperative to provide an emergency management system to prevent inadvertent external interference with the conveyor system. Several such safety arrangements have been proposed in the state of the art. Such safety mechanisms are based on an underlying principle that whence triggered, driving power is prevented from being supplied to the conveyor system.

One general example of such emergency management system is known from US 2011/0098829. The patent application discloses a networked arrangement of the safety controllers that can be employed to flexibly match to a given installation topology such as a plant structure.

Another general example of such emergency management system is known from DE 10 2010 037714 B3. The patent discloses an emergency stop module arrangement based on plug-on modules which can be plugged on the load switches such that the wiring complexity as well as the space requirement for the arrangement in a switching cabinet is reduced.

Yet another solution known in the state of the art is based on installation of pull-ropes on opposite sides of the conveyor belt extending along the length of the conveyor system. Normally-closed lever switches are connected to the pull-rope at regular intervals along the length thereof such that as the pull-rope is pulled, at least one lever switch connected thereto is opened. All lever switches are connected in series to the main drive of the conveyor system. Thus, during an emergency, an operator may pull the pull-rope to cut-off power supply to the main drive of the conveyor system, and thereby bringing the conveyor belt to an immediate halt. After an emergency stop, it becomes necessary to manually inspect entire length of the conveyor system to ascertain the location of an emergency and take appropriate steps to address the same.

This solution may be satisfactory for small-scale conveyor systems with a length of only a few meters. However, in case of large-scale conveyor systems, such as those found in mining, metallurgy, and similar applications, which run up to lengths of a few hundred meters to a few kilometers, such manual inspection leads to inordinate delay in addressing an emergency situation and restarting the conveyor system.

Accordingly, it is desirable to provide a system and a method for emergency management such that location information corresponding to an emergency is readily available such that required action may be taken in a time-efficient manner.

One such system is known from US 5,263,570. The patent provides a light indicator system including a plurality of lights positioned at various locations along the length of a conveyor for expeditiously locating a site of emergency in the conveyor system. Each indicator light is connected to an emergency switch included in the conveyor system. The light indicator system includes an indicator circuit, a resistor, and light means. The indicator circuit is connected to each of said emergency switches, said indicator circuit includes a bridge rectifier which connects said indicator circuit to an emergency switch, and is activated when said emergency switch indicates said emergency situation. The resistor is connected in series with said bridge rectifier. The light means including at least one light emitting diode is connected to the indicator circuit such that the light means is illuminated when said emergency switch indicates said emergency situation.

As will be readily apparent, the above-mentioned patent does not provide an entirely satisfactory solution for the recognized need therein, especially if the conveyor system extends over a few miles, the technique disclosed in the above-mentioned patent would still necessitate that an operator manually inspects the length of the conveyor system to identify the switch that has been activated.

In light of the foregoing, there is a need for a system and a method for emergency management such that location information corresponding to an emergency is readily available such that required action may be taken and an operation of the conveyor system may be restarted in a time-efficient manner. Moreover, taking into consideration the vast installed base of pull-rope based conveyors safety management systems, it is desirable that the system and the method for emergency management should be such that the existing pull-rope based emergency management system are upgraded that is, it should be possible to retrofit the system and method for emergency management in existing pull-rope based emergency management systems.

Accordingly, an object of the present invention is to provide an emergency management system and a method therefor such that location information corresponding to an emergency is readily available.

The object of the present invention is achieved by an emergency management system and a method therefor according to claims 1 and 7 respectively. Further embodiments of the present invention are addressed in the dependent claims.

In accordance with the foregoing object an emergency management system suitable for use with a conveyor system is provided. The emergency management system comprises a master module and a plurality of slave modules. The master module and each slave module include an input terminal and an output terminal such that the master module and the plurality of slave modules are interconnected in series to form a closed loop. Each slave module comprises switching means, a normal relay, an emergency relay, and controlling means. The switching means provide at least one input port, a normal output port and an emergency output port. The at least one input port is connected to the input terminal. The switching means are operable in at least a normal operating mode and an emergency operating mode such that an electrically-conductive path is provided from the at least one input port to the normal output port and the emergency output port respectively. The normal relay is operable for providing an electrically-conductive path between the normal output port and the output terminal. The emergency relay is operable for providing an electrically-conductive path from the input terminal to the output terminal. The controlling means are configured for sensing an operating mode of the switching means, providing information related to an identity of the slave module and said operating mode of said switching means to the master module, and operating at least one of the normal relay and the emergency relay based on said operating mode.

The present invention, thus, provides an emergency management system that is capable of providing location information in case of an emergency. During an emergency, necessary shut-down of the conveyor system is achieved, and thereafter, the emergency management system is operable to determine the operating mode of each slave module. Thus, the present invention facilitates immediate fault localization such that necessary steps may be taken in a time efficient manner at site of an emergency and the conveyor system may be restored to normal operation within least possible time interval, thereby, ensuring minimum system downtime. Further, the emergency management system of the present invention is applicable to any required industrial environment and importantly, can be easily retrofitted in existing conveyor systems without necessitating a replacement of the legacy systems, and hence, ensures a cost-effective approach.

In accordance with another embodiment of the present invention, the switching means in at least one slave module are configured in the normal operating mode. A control signal is provided to the input terminal of at least one slave module. As the switching means are configured in the normal operating mode, an electrically-conductive path is established between the input port and the normal output port. Thus, the control signal is available on the normal output port. The controlling means sense the control signal on the normal output port, provide information related to an identity of the at least one slave module and said operating mode of said switching means to the master module, and operate the normal relay to establish an electrically-conductive path between the normal output port and the output terminal such that the control signal is provided to the output terminal of the at least one slave module. Thus, according to this technical feature, the master module is able to interrogate a slave module in which switching means are operating in the normal operating mode such that information related to an identity of the slave module and the operating mode of the switching means therein is provided to the master module.

In accordance with another embodiment of the present invention, the switching means in at least one slave module are configured in the emergency operating mode. A control signal is provided to the input terminal of at least one slave module. As the switching means are configured in the emergency operating mode, an electrically-conductive path is established between the input port and the emergency output port. Thus, the control signal is provided to the emergency output port. The controlling means sense the control signal on the emergency output port, provide information related to an identity of the at least one slave module and said operating mode of said switching means to the master module, and operate the emergency relay to establish an electrically-conductive path between the input terminal and the output terminal such that the control signal is provided to the output terminal of the at least one slave module. Thus, according to this technical feature, the master module is able to interrogate a slave module in which switching means are operating in the emergency operating mode such that information related to an identity of the slave module and the operating mode of the switching means therein is provided to the master module.

In accordance with another embodiment of the present invention, the master module identifies an interconnection between a first slave module and a second slave module to be in a short-circuit condition based on current level in the closed loop exceeding a predefined threshold subsequent to operating one of the normal relay and the emergency relay in the first slave module. Thus, according to this technical feature, the master module is able to detect a short-circuit condition in the closed loop.

In accordance with another embodiment of the present invention, the master module identifies an interconnection between a first slave module and a second slave module to be in an open-circuit condition based on unavailability of information related to an identity of the second slave module and an operating mode of switching means in the second slave module after a predefined time duration subsequent to operating one of the normal relay and the emergency relay in the first slave module. Thus, according to this technical feature, the master module is able to detect an open-circuit condition in the closed loop.

In accordance with another embodiment of the present invention, the master module is configured for establishing a steady-state signal in said closed loop, sensing a change in said steady-state signal in said closed loop, and providing a shut-down signal to the conveyor system to stop an operation thereof based on said change in said steady-state signal. Thus, according to this technical feature, a change in an operating mode of the switching means, and/or a change in circuit conditions due to a short-circuit and/or an open circuit in said closed loop is/are detected by the master module, which issues a shut-down signal such that the conveyor system is stopped.

The present invention is further described hereinafter with reference to illustrated embodiments shown in the accompanying drawings, in which:
- FIG 1: illustrates a schematic representation of an emergency management system in accordance with an embodiment of the present invention,
- FIG 2: illustrates a schematic representation of a slave module in accordance with an embodiment of the present invention,
- FIG 3: illustrates a method for operating the emergency management system in accordance with an embodiment of the present invention,
- FIG 4: illustrates a method for operating the emergency management system in a diagnostic mode in accordance with another embodiment of the present invention, and
- FIG 5: illustrates a method for operating the emergency management system in a monitoring mode in accordance with another embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

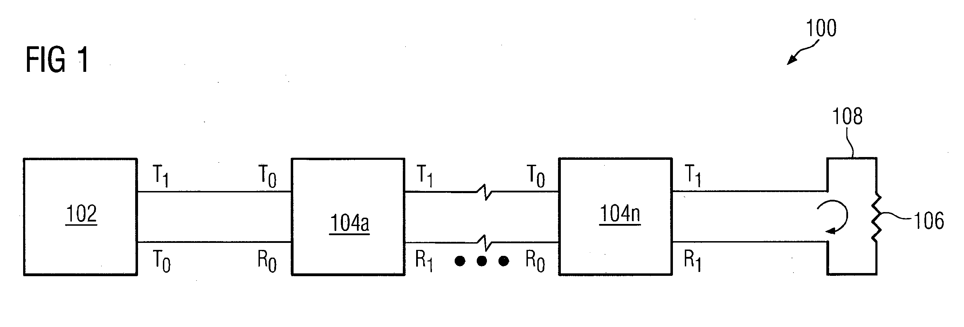

Referring now to FIG 1, a schematic representation of an emergency management system 100 suitable for use with a conveyor system in accordance with an embodiment of the present invention is provided.

It should be noted that the present invention is being described in the context of a conveyor system. However, various techniques of the present invention are equally applicable in various other applications such as fire alarm management in building automation, and the like. Thus, the scope of the present invention is not limited to the conveyor systems.

The emergency management system 100 includes a master module 102 and a plurality of slave modules 104a through 104n. The emergency management system 100 also includes electrical impedance 106. The master module 102, the plurality of slave modules 104, and the electrical impedance 106 are interconnected to form a closed loop 108.

The emergency management system 100 of the present invention is suitable for use with a conveyor system (not shown). As well-known in the state of the art, the conveyor system includes a drive control module that provides power supply to various motorized components included in the conveyor system.

The master module 102 is communicatively coupled to the drive control unit and may provide one or more control signal thereto. Further, the master module 102 may receive power supply from the drive control unit. Alternatively, the master module 102 receives power supply from an independent source. The master module 102 is also configured to provide one or more control signals to slave modules 104.

The individual slave modules 104 are spatially located along a length of the conveyor system, either on one or both sides of the conveyor system.

As depicted in the adjoining figure, the master module 102 and each slave modules 104 have an input terminal (T0) and an output terminal (T1). Thus, the master module 102 and the plurality of slave modules 104 are interconnected to form a closed loop 108. Each slave module 104 also includes return terminals R0 and R1 such that a return path of the closed loop is also established through the slave modules 104. The electrical impedance 106 is included in the closed loop 108, as shown in the adjoining figure, to limit a current level in the closed loop within permissible limits.

Each slave module is operable in two distinct operating modes, namely, a normal operating mode and an emergency operating mode. The slave modules 104 are operatively coupled to a pull-rope arrangement or any other actuating means such that an operator or any other suitable agent is able to actuate one or more slave modules 104. Each slave modules 104 is configured such that, subsequent to such actuation while working in the normal operating mode, the slave module 104 changes from the normal operating mode to the emergency operating mode.

During an initial start-up of the conveyor system, each slave module 104 is configured to operate in the normal operating mode, and the master module 102 establishes a steady-state signal in the closed loop 108. When one or more slave modules 104 are actuated, one or more slave modules 104 change from the normal operating mode to the emergency operating mode, and consequently, the steady-state signal is changed. The master module 102 senses the change in steady-state signal and provides a shut-down signal to the drive control unit.

In order to provide a fail-safe arrangement, the master module 102 is configured to also generate the shut-down signal based on detection of short-circuit or open circuit condition in the closed loop 108. Thus, in the event of short-circuit or open circuit condition in the closed loop 108, which affect the steady-state signal in the closed loop 108 and may prevent desired operation of the emergency management system 100, the conveyor system is shut-down as a preventive measure.

It should be noted that the conveyor system may be configured to respond to the shut-down signal in any suitable manner. In various exemplary embodiments of the present invention, the shut-down signal may result in switching-off power supply to a motor drive of the conveyor system, or activating a braking system of the conveyor system, or de-clutching the motor drive from a transmission drive of the conveyor system, and so on.

Subsequent to providing a shut-down signal to the drive control unit in the event of an emergency indicated through actuation of one or more slave modules 104 or detection of any undesirable state, such as short-circuit or open circuit, in the emergency management system 100, the master module 102 is configured to successively interrogate each slave module 104 to obtain information related to an operating mode thereof.

In an alternative embodiment of the present invention, each slave module 104 is configured to independently provide information related to an operating mode thereof to the master module 102 without an active interrogation from the same.

The master module 102 includes a display module (not shown), and is configured to display the operating mode of one or more slave devices 104 in the emergency management system 100 and also, any short-circuit or open circuit conditions in the emergency management system 100.

These and other related features of the present invention shall be explained in more detail in conjunction with subsequent figures.

In accordance with an embodiment of the present invention, the master module 102 is configured to generate appropriate audio-visual alarms to indicate an emergency condition in the conveyor system. Further, in the event of an alarm, if appropriate steps to suitably acknowledge and resolve an emergency situation and restart the conveyor system are not taken within a predefined time interval, a second set of audio-visual alarms may be triggered by the master module 102.

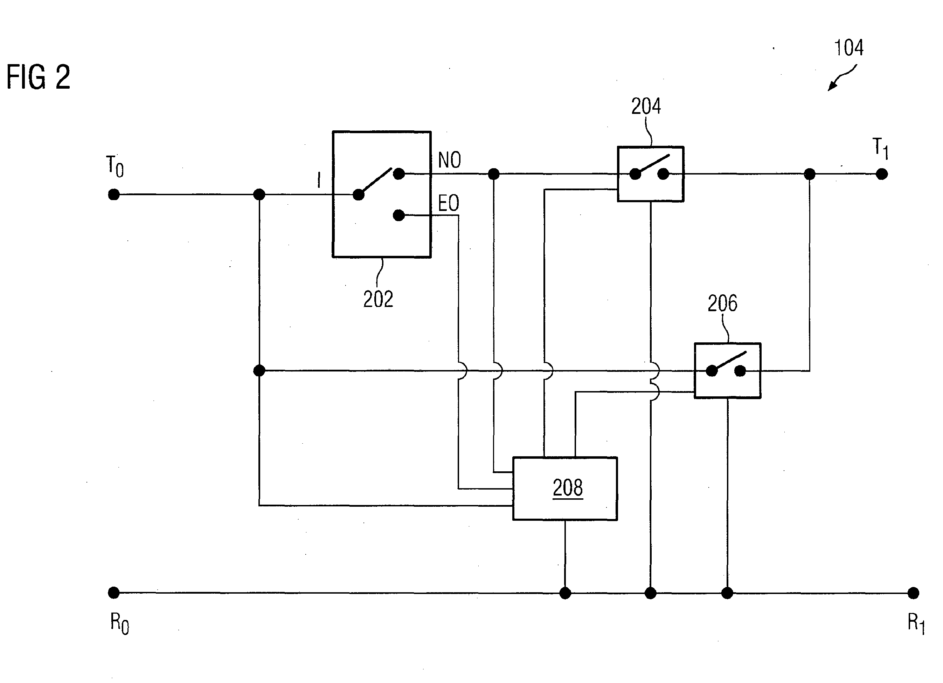

Referring now to FIG 2, a schematic representation of a slave module 104 is provided in accordance with an embodiment of the present invention.

Each slave module 104 includes switching means 202, a normal relay 204, an emergency relay 206, and controlling means 208.

The switching means 202 provide at least one input port (I), a normal output port (NO) and an emergency output port (EO). The input port (I) is connected to the input terminal (T0). The normal output port (NO) is connected to the normal relay 204 such that an output from the normal output port (NO) is provided to the normal relay 204. In addition, the normal output port (NO) is connected to the controlling means 208 such that the controlling means 208 is able to sense an output from the normal output port (NO). Similarly, the emergency output port (EO) is connected to the controlling means 208 such that the controlling means 208 is able to sense an output from the emergency output port (EO).

The switching means 202 are operable in at least a normal operating mode and an emergency operating mode. When the switching means 202 operate in the normal operating mode an electrically-conductive path is provided from the input port (I) to the normal output port (NO). Similarly, when the switching means 202 operate in the emergency operating mode an electrically-conductive path is provided from the input port (I) to the emergency output port (EO).

As mentioned in conjunction with FIG 1, each slave module 104 is operable in two distinct operating modes, namely, a normal operating mode and an emergency operating mode. It should be noted, as described herein, the two operating modes of the slave module 104 are based on the respective operating modes of the switching means 202 therein. Thus, when the switching means 202 in a slave module 104 are operating in the normal operating mode, said slave module 104 is said to be in the normal operating mode and similarly, when the switching means 202 in a slave module 104 are operating in the emergency operating mode, said slave module 104 is said to be in the emergency operating mode.

As will be readily apparent from the adjoining figure, the switching means 202 correspond to a single-pole double-throw (SPDT) switch configuration. It should be readily apparent to a person ordinarily skilled in the art that several different implementations of the switching means 202 are possible, for example, the switching means 202 may be implemented using a parallel combination of two single-pole single-throw (SPST) switches, and so on. All such variations are intended to be well within the scope of the present invention.

The normal relay 204 is connected on one side, to the normal output port (NO) in the switching means 202, and on the other side, to the output terminal (T1). Thus, the normal relay 204 is operable for providing an electrically-conductive path between the normal output port and the output terminal.

The emergency relay 206 is connected on one side, to the input terminal (T0), and on the other side, to the output terminal (T1). Thus, the emergency relay is operable for providing an electrically-conductive path from the input terminal to the output terminal.

In addition, each of the normal relay 204 and the emergency relay 206 are also operatively coupled to the controlling means 208 such that controlling means 208 is capable of controlling the state of each of said relays.

It should be noted that each of the normal relay 204 and the emergency relay 206 may be implemented using any suitable electrical relays. In a preferred example, said relays 204 and 206 are such that when an actuation signal is provided, a closed state is achieved, and as soon as the actuation signal is removed, an open state is achieved. Therefore, any suitable non-latching relays may be used to implement the normal relay 204 and the emergency relay 206. In another example of the present invention, it is possible to implement each of said relays using a latching relay. Thus, the controlling means 208 sends a first actuation signal to change the state from open to close (or vice versa) and a second actuation signal to change the state from close to open (or vice versa).

The controlling means 208 are configured to store information related to an identity of the slave module 104 such that each slave module 104 is uniquely identifiable.

Further, the controlling means 208 are connected to each of the input port (I), the normal output port (NO), and the emergency output port (EO). Thus, the controlling means 208 is capable of directly sensing a control signal received from the master module 102 available at the input port (I). In addition, the controlling means is capable of sensing an output available at each of the normal output port (NO) and the emergency output port (EO). Thus, based on presence of an output at one of the normal output port (NO) and the emergency output port (EO), the switching means 202 are respectively determined to be in the normal operating mode and the emergency operating mode.

Based on receiving an interrogation signal from the master module 102, the controlling means 208 determine the operating mode of the switching means 202. Subsequently, the controlling means 208 provide information related to an identity of the slave module 104 and said operating mode of said switching means 202 to the master module 102 through the return terminal (R0).

In addition, the controlling means 208 suitably operate one of the normal relay 204 and the emergency relay 206 based on said operating mode of the switching means 202. Thus, if the switching means 202 are in the normal operating mode, the normal relay 204 is operated to change to a closed state, while the emergency relay 206 remains in an open state. Similarly, if the switching means 202 are in the emergency operating mode, the emergency relay 206 is operated to change to a closed state, while the normal relay 206 remains in an open state.

Further, in case the normal relay 204 and the emergency relay 206 are implemented using latching relays, the controlling means 208 are configured such that, based on receiving a shut-down signal from the master module 102, the controlling means 208 suitably operate one or each of the normal relay 204 and the emergency relay 206 such that each of said relays 204 and 206 change to an open state.

In various embodiments of the present invention, the controlling means may be implemented through a suitable combination of hardware, software, and firmware, as may be required.

As mentioned in conjunction with FIG 1, in an alternative embodiment of the present invention, each slave module 104 is configured to independently provide information related to an operating mode thereof to the master module 102 without an active interrogation from the same. In this embodiment, each slave module 104 is provided with an independent power supply (not shown). The controlling means 208 generate and provide an interrogation signal to the input port (I) and sense an output available on one of the normal output port (NO) and the emergency output port (EO). Subsequently, the controlling means 208 provide information related to the identity of the slave module 104 and the operating mode thereof to the master module 102.

The operation of the emergency management system 100, as described above, will be more readily understood in conjunction with the following figures.

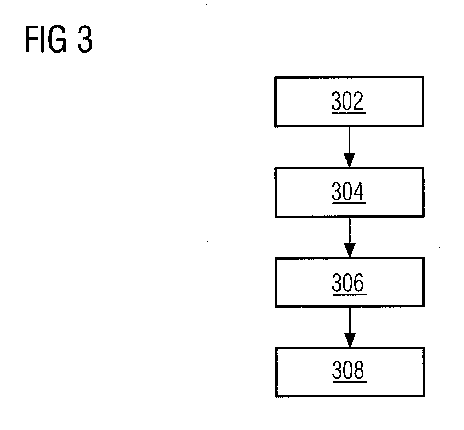

FIG 3 illustrates a method for operating the emergency management system in accordance with an embodiment of the present invention.

At step 302, the master module 102 provides a control signal to the input terminal (T0) of at least one slave module 104. In various embodiments of the present invention, the control signal may be based on a direct-current signal, an alternating-current signal, a data modulated signal, and so on.

At step 304, the controlling means 208 receive the control signal. If required, the controlling means 208 operate the normal relay and the emergency relay to ensure that each of said relays is in open state. The controlling means 208 further perform a sensing operation, wherein the controlling means 208 sense an operating mode of the switching means 202. As explained earlier, the switching means 202 are operable in one of a normal operating mode and an emergency operating mode. During the normal operating mode, an electrically-conductive path is provided from the input port (I) to the normal output port (NO); while during the emergency operating mode, an electrically-conductive path is provided from the input port (I) to the emergency output port (EO). The controlling means 208 sense availability of an output on the normal output port (NO) and emergency output port (EO), and accordingly, determine the operating mode the switching means 202.

At step 306, the controlling means 208 provide information related to an identity of the slave module 104 and said operating mode of said switching means 202 to the master module 102. It should be noted that any suitable communication technique may be used at this step to communicate the desired information from the controlling means 208 to the master module 102.

At step 308, the controlling means 208 operate one of the normal relay 204 and the emergency relay 206 based on the operating mode of the switching means 202 such that the control signal is provided to the output terminal (T1) of the slave module 104.

Thus, in accordance with the method outlined above, the master module 102 is able to sequentially interrogate each slave module 104 with regard to the operating mode of the switching means 202 therein. Subsequently, the master module 102 may display various slave modules 104 along with the operating modes of respective switching means 202 to a user of the emergency management system 100.

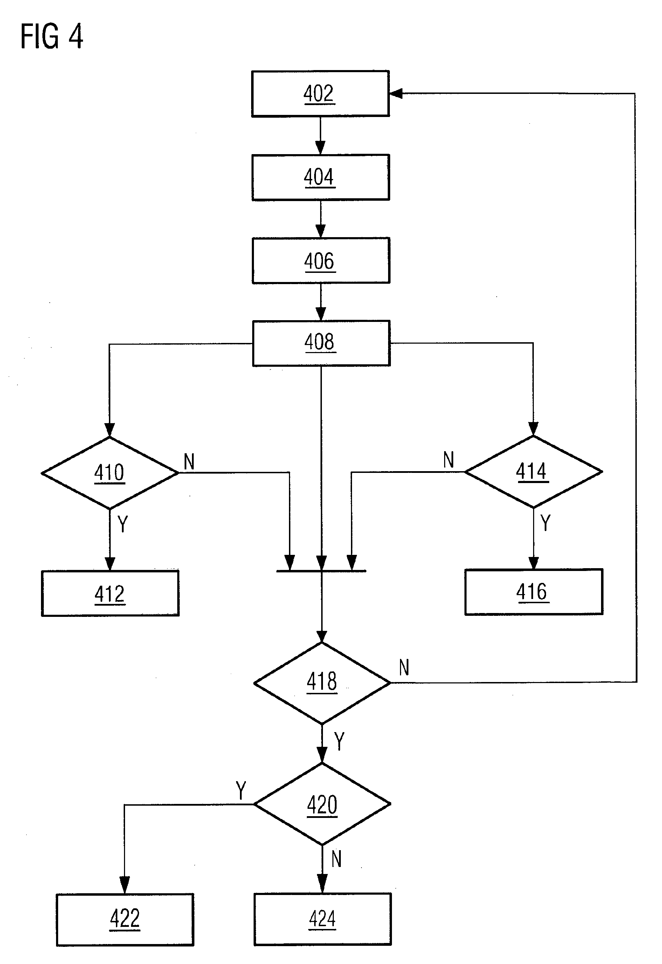

FIG 4 illustrates a method for the emergency management system in a diagnostic mode in accordance with another embodiment of the present invention.

The steps 402 through 408 are respectively same as steps 302 through 308, described in conjunction with FIG 3.
Subsequent to operating one of the normal relay 204 and the emergency relay 206 in a slave module 104, which will now be referred to as 'last interrogated slave module', three possibilities arise, accordingly, one of steps 410, 414, and 418 is performed.

At step 410, it is determined if the interconnection between the last interrogated slave module 104 and a succeeding slave module 104 is in a short-circuit condition. This determination is based on current level in the closed loop 108 exceeding a predefined threshold subsequent to operating one of the normal relay 204 and the emergency relay 206 in the last interrogated slave module 104.

It should be noted that a short-circuit condition between the master module 102 and the slave module 104 directly connected to the master module 102 in the closed loop 108, is regarded as a specific case, in which initiation of the diagnostic mode in the emergency management system 100, wherein the master module 102 provides a control signal to the directly connected slave module 104 leads to a short-circuit condition.

In case a short-circuit condition is determined, then, at step 412, the corresponding details are displayed through the master module 102 such that required corrective actions may be performed. In various examples, the required information may be displayed in textual format or graphical format, as may be desirable. In addition, the required information may be stored in a suitable storage medium for subsequent use.

At step 414, it is determined if the interconnection between the last interrogated slave module 104 and a succeeding slave module 104 is in an open-circuit condition. At this step, two possibilities exist.

According to the first possibility, the last interrogated slave module 104 is the last slave module 104 in the series of slave modules 104 in the closed loop 108. In this case, the master module 102 expects to receive the control signal output from the output terminal of the last interrogated slave module 104 at the input terminal of the master module 102. In this case, if the control signal is successfully received, the interconnection between the last interrogated slave module 104 and the master module 102 is determined to be free from an open-circuit condition. Alternatively, an open-circuit condition is identified therein.

According to the second possibility, the last interrogated slave module 104 is not the last slave module 104 in the series of slave modules 104 in the closed loop 108. In this case, the determination of an open-circuit condition is based on unavailability of information related to an identity of the succeeding slave module 104 after a predefined time duration subsequent to operating one of the normal relay 204 and the emergency relay in the last interrogated slave module 104.

As pointed out in case of short-circuit condition, it should be noted that an open-circuit condition between the master module 102 and the slave module 104 directly connected to the master module 102 in the closed loop 108, is regarded as a specific case, in which initiation of the diagnostic mode in the emergency management system 100, wherein the master module 102 attempts to provide a control signal to the directly connected slave module 104, however, there is no information provided to the master module 102 even after a predefined time duration has elapsed subsequent to the initiation of the diagnostic mode and provision of the control signal from the master module 102.

In case an open-circuit condition is identified, then, at step 416, the corresponding details are displayed through the master module 102 such that required corrective actions may be performed. In various examples, the required information may be displayed in textual format or graphical format, as may be desirable. In addition, the required information may be stored in a suitable storage medium for subsequent use.

At step 418, it is determined if the last interrogated slave module 104 is the last slave module 104 in the series of slave modules 104 in the closed loop 108. If the assessment is negative, that is, the last interrogated slave module 104 is not the last slave module 104 in the series of slave modules 104 in the closed loop 108, then steps 402 onwards are performed in the manner described above.

If the assessment is positive, that is, the last interrogated slave module 104 is the last slave module 104 in the series of slave modules 104 in the closed loop 108, the master module 102 displays a list of all slave modules 104, along with respective operating modes.

In particular, at step 420, it is determined if any of the slave modules 104 are operating in the emergency operating mode. If the assessment is positive, the list of such slave modules 104 is provided. If the assessment is negative, then at step 424, the diagnostic test is deemed to be successful, and the emergency management system 100 is determined to be in good condition for starting an operation thereof.

In an exemplary embodiment of the present invention, at steps 412, 416, and 422, as described above, suitable audio-visual warnings are generated.

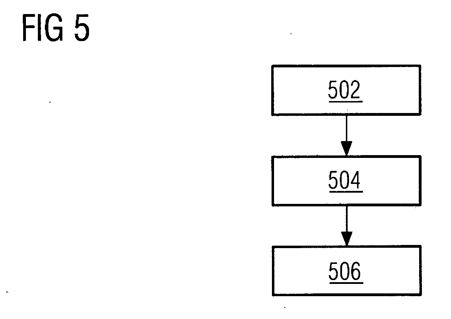

Further, in another exemplary embodiment of the present invention, the master module 102 may provide means for providing control signals to the drive control unit to start the conveyor system and also, start operation of the emergency management system 100 in a monitoring mode, as explained in conjunction with FIG 5 below. Such means may be implemented in software, hardware, firmware, or a combination thereof.

FIG 5 illustrates a method for the emergency management system in a monitoring mode in accordance with another embodiment of the present invention.

At step 502, the master module 102 establishes a steady-state signal in the closed loop 108 based on a predefined criterion. In accordance with an exemplary embodiment of the present invention, the emergency management system 100 is operable in the monitoring mode only after the emergency management system 100 has been configured in such manner that the diagnostic mode, as described in conjunction with FIG 4, is successful.

At step 504, the master module 102 senses a change in said steady-state signal in the closed loop 108.

At step 506, the master module 102 provides a shut-down signal to the conveyor system to stop an operation thereof based on said change in said steady-state signal. Further, at this step, the master module 102 automatically initiates an operation of the emergency management system 100 in the diagnostic mode.

The present invention facilitates immediate fault localization such that necessary steps may be taken in a time efficient manner at site of emergency and the conveyor system may be restored to normal operating mode within least possible time interval.

The emergency management system of the present invention is applicable to any required industrial environment and importantly, can be easily retrofitted in existing conveyor systems without necessitating a replacement of the legacy systems, and hence, ensuring a cost-effective approach.

While the present invention has been described in detail with reference to certain embodiments, it should be appreciated that the present invention is not limited to those embodiments. In view of the present disclosure, many modifications and variations would present themselves, to those of skill in the art without departing from the scope of this invention. The scope of the present invention is, therefore, indicated by the following claims rather than by the foregoing description. All changes, modifications, and variations coming within the meaning and range of equivalency of the claims are to be considered within their scope.

## Claims

1. An emergency management system (100) suitable for use with a conveyor system, the emergency management system (100) comprising a master module (102) and a plurality of slave modules (104), the master module (102) and each slave module (104) providing an input terminal (T0) and an output terminal (T1) such that the master module (102) and the plurality of slave modules (104) are interconnected in series to form a closed loop (108), wherein the master module (102) is configured for providing a control signal to at least one slave module (104), and wherein each slave module (104) comprises:
- switching means (202) providing at least one input port (I), a normal output port (NO) and an emergency output port (EO), wherein the at least one input port (I) is connected to the input terminal (T0), and wherein the switching means (202) are operable in at least a normal operating mode and an emergency operating mode such that an electrically-conductive path is provided from the at least one input port (I) to the normal output port (NO) and the emergency output port (EO) respectively,
- a normal relay (204), the normal relay (204) being operable for providing an electrically-conductive path between the normal output port (NO) and the output terminal (T1),
- an emergency relay (206), the emergency relay (206) being operable for providing an electrically-conductive path from the input terminal (T0) to the output terminal (T1), and
- controlling means (208) configured for sensing one of the normal operating mode and the emergency operating mode of the switching means (202) based on availability of said control signal at the normal output port (NO) and the emergency output port (EO) respectively, providing information related to an identity of the slave module (104) and said operating mode of said switching means (202) to the master module (102), and operating the normal relay (204) when the switching means (202) are operating in the normal operating mode and the emergency relay (206) when the switching means (202) are operating in the emergency operating mode such that the control signal is provided to the output terminal (T1) of said slave module (104).

2. The emergency management system (100) according to claim 1, wherein the switching means (202) in at least one slave module (104) are configured in the normal operating mode, and wherein a control signal is provided to the input terminal (T0) of the at least one slave module (104), wherein the controlling means (208) sense the control signal on the normal output port (NO), provide information related to an identity of the at least one slave module (104) and said operating mode of said switching means (202) to the master module (102), and operate the normal relay (204) to establish an electrically-conductive path between the normal output port (NO) and the output terminal (T1) such that the control signal is provided to the output terminal (T1) of the at least one slave module (104).

3. The emergency management system (100) according to claim 1, wherein the switching means (202) in at least one slave module (104) are configured in the emergency operating mode, wherein a control signal is provided to the input terminal (T0) of the at least one slave module (104), wherein the controlling means (208) sense the control signal on the emergency output port (EO), provide information related to an identity of the at least one slave module (104) and said operating mode of said switching means (202) to the master module (102), and operate the emergency relay (206) to establish an electrically-conductive path between the input terminal (T0) and the output terminal (T1) such that the control signal is provided to the output terminal (T1) of the at least one slave module (104).

4. The emergency management system (100) according to any of claims 2 or 3, wherein the master module (102) identifies an interconnection between a first slave module (104) and a second slave module (104) to be in a short-circuit condition based on current level in the closed loop (108) exceeding a predefined threshold subsequent to operating one of the normal relay (204) and the emergency relay (206) in the first slave module (104).

5. The emergency management system (100) according to any of claims 2 or 3, wherein the master module (102) identifies an interconnection between a first slave module (104) and a second slave module (104) to be in an open-circuit condition based on unavailability of information related to an identity of the second slave module (104) and an operating mode of switching means (202) in the second slave module (104) after a predefined time duration subsequent to operating one of the normal relay (204) and the emergency relay (206) in the first slave module (104).

6. The emergency management system (100) according to any of claims 1 to 5, wherein the master module (102) is configured for establishing a steady-state signal in said closed loop (108), sensing a change in said steady-state signal in said closed loop (108), and providing a shut-down signal to the conveyor system to stop an operation thereof based on said change in said steady-state signal.

7. A method for operating an emergency management system (100) suitable for use with a conveyor system in accordance with any of claims 1 to 6, the emergency management system (100) comprising a master module (102) and a plurality of slave modules (104), the master module (102) and each slave module (104) providing an input terminal (T0) and an output terminal (T1) such that the master module (102) and the plurality of slave modules (104) are interconnected in series to form a closed loop (108), wherein the master module (102) is configured for providing a control signal to at least one slave module (104), and further wherein each slave module (104) comprises switching means (202) providing at least one input port (I) connected to the input terminal (T0), a normal output port (NO) and an emergency output port (EO), a normal relay (204) operable for providing an electrically-conductive path between the normal output port (NO) and the output terminal (T1), and an emergency relay (206) operable for providing an electrically-conductive path from the input terminal (T0) to the output terminal (T1), the method comprising:
(a) providing (302, 402) said control signal to the input terminal (T0) of at least one slave module (104),
(b) sensing (304, 404) an operating mode of the switching means (202), wherein the switching means (202) are operable in at least a normal operating mode and an emergency operating mode such that an electrically-conductive path is provided from the at least one input port (I) to the normal output port (NO) and the emergency output port (EO) respectively, wherein the switching means (202) are sensed to be in one of the normal operating mode and the emergency operating mode based on availability of said control signal at the normal output port (NO) and the emergency output port (EO) respectively,
(c) providing (306, 406) information related to an identity of the at least one slave module (104) and said operating mode of said switching means (202) to the master module (102), and
(d) operating (308, 408) the normal relay (204) when the switching means (202) are operating in the normal operating mode, and the emergency relay (206) when the switching means (202) are operating in the emergency operating mode, such that the control signal is provided to the output terminal (T1) of said at least one slave module (104).

8. The method according to claim 7 further comprising successively performing steps (a) through (d) of claim 7 for each slave module (104) in said closed loop (108) such that each slave module (104) and an operating mode of the corresponding switching means (202) are identified.

9. The method according to claim 8 further comprising identifying (410, 414) at least one of a location of a short-circuit condition in said closed loop (108), and a location of an open-circuit condition in said closed loop (108).

10. The method according to claim 9, wherein an interconnection between a first slave module (104) and a second slave module (104) is identified to be in a short-circuit condition based on current level in the closed loop (108) exceeding a predefined threshold subsequent to operating one of the normal relay (204) and the emergency relay (206) in the first slave module (104).

11. The method according to claim 9, wherein an interconnection between a first slave module (104) and a second slave module (104) is identified to be in an open-circuit condition based on unavailability of information related to an identity of the second slave module (104) after a predefined time duration subsequent to operating one of the normal relay (204) and the emergency relay (206) in the first slave module (104).

12. The method according to any of claims 7 through 11 further comprising:
- establishing (502) a steady-state signal in said closed loop (108) based on a predefined criterion,
- sensing (504) a change in said steady-state signal in said closed loop (108), and
- providing (506) a shut-down signal to the conveyor system to stop an operation thereof based on said change in said steady-state signal.

## Patentansprüche

1. Notfallmanagementsystem (100), das zur Verwendung mit einem Fördersystem geeignet ist, wobei das Notfallmanagementsystem (100) ein Mastermodul (102) und eine Mehrzahl von Slavemodulen (104) umfasst, wobei das Mastermodul (102) und jedes Slavemodul (104) eine Eingangsklemme (T0) und eine Ausgangsklemme (T1) bereitstellen, derart dass das Mastermodul (102) und die Mehrzahl von Slavemodulen (104) in Reihe miteinander verbunden sind, um einen geschlossenen Kreis (108) zu bilden, wobei das Mastermodul (102) zum Übermitteln eines Steuersignals an mindestens ein Slavemodul (104) konfiguriert ist, und wobei jedes Slavemodul (104) umfasst:
- Schaltmittel (202), die mindestens einen Eingangsanschluss (I), einen Normalausgangsanschluss (NO) und einen Notfallausgangsanschluss (EO) bereitstellen, wobei der mindestens eine Eingangsanschluss (I) mit der Eingangsklemme (T0) verbunden ist, und wobei die Schaltmittel (202) in mindestens einem Normalbetriebsmodus und einem Notfallbetriebsmodus betrieben werden können, derart dass ein elektrisch leitender Pfad von dem mindestens einen Eingangsanschluss (I) zum Normalausgangsanschluss (NO) bzw. dem Notfallausgangsanschluss (EO) bereitgestellt wird,
- ein Normalrelais (204), wobei das Normalrelais (204) zum Bereitstellen eines elektrisch leitenden Pfades zwischen dem Normalausgangsanschluss (NO) und der Ausgangsklemme (T1) betrieben werden kann,
- ein Notfallrelais (206), wobei das Notfallrelais (206) zum Bereitstellen eines elektrisch leitenden Pfades von der Eingangsklemme (T0) zur Ausgangsklemme (T1) betrieben werden kann, und
- Steuermittel (208), die konfiguriert sind zum Erfassen eines von dem Normalbetriebsmodus und dem Notfallbetriebsmodus der Schaltmittel (202) basierend auf der Verfügbarkeit des Steuersignals am Normalausgangsanschluss (NO) bzw. dem Notfallausgangsanschluss (EO), Übermitteln von Informationen in Bezug auf eine Identität des Slavemoduls (104) und den Betriebsmodus der Schaltmittel (202) an das Mastermodul (102) und Betreiben des Normalrelais (204), wenn die Schaltmittel (202) im Normalbetriebsmodus funktionieren, und des Notfallrelais (206), wenn die Schaltmittel (202) im Notfallbetriebsmodus funktionieren, derart dass das Steuersignal zur Ausgangsklemme (T1) des Slavemoduls (104) übermittelt wird.

2. Notfallmanagementsystem (100) nach Anspruch 1, wobei die Schaltmittel (202) in mindestens einem Slavemodul (104) im Normalbetriebsmodus konfiguriert sind, und wobei ein Steuersignal zum Eingangsschluss (T0) des mindestens einen Slavemoduls (104) übermittelt wird, wobei die Steuermittel (208) das Steuersignal am Normalausgangsanschluss (NO) erfassen, Informationen in Bezug auf eine Identität des mindestens einen Slavemoduls (104) und den Betriebsmodus der Schaltmittel (202) an das Mastermodul (102) übermitteln und das Normalrelais (204) zum Herstellen eines elektrisch leitenden Pfades zwischen dem Normalausgangsanschluss (NO) und der Ausgangsklemme (T1) betreiben, derart dass das Steuersignal zur Ausgangsklemme (T1) des mindestens einen Slavemoduls (104) übermittelt wird.

3. Notfallmanagementsystem (100) nach Anspruch 1, wobei die Schaltmittel (202) in mindestens einem Slavemodul (104) im Notfallbetriebsmodus konfiguriert sind, wobei ein Steuersignal zum Eingangsschluss (T0) des mindestens einen Slavemoduls (104) übermittelt wird, wobei die Steuermittel (208) das Steuersignal am Notfallausgangsanschluss (EO) erfassen, Informationen in Bezug auf eine Identität des mindestens einen Slavemoduls (104) und den Betriebsmodus der Schaltmittel (202) an das Mastermodul (102) übermitteln und das Notfallrelais (206) zum Herstellen eines elektrisch leitenden Pfades zwischen der Eingangsklemme (T0) und der Ausgangsklemme (T1) betreiben, derart dass das Steuersignal zur Ausgangsklemme (T1) des mindestens einen Slavemoduls (104) übermittelt wird.

4. Notfallmanagementsystem (100) nach einem der Ansprüche 2 oder 3, wobei das Mastermodul (102) basierend auf einem Strompegel im geschlossenen Kreis (108), der eine vordefinierte Schwelle überschreitet, nach dem Betreiben eines von dem Normalrelais (204) und dem Notfallrelais (206) im ersten Slavemodul (104) erkennt, dass eine Zwischenverbindung zwischen einem ersten Slavemodul (104) und einem zweiten Slavemodul (104) in einem Kurzschlusszustand ist.

5. Notfallmanagementsystem (100) nach einem der Ansprüche 2 oder 3, wobei das Mastermodul (102) basierend auf der Nichtverfügbarkeit von Informationen in Bezug auf eine Identität des zweiten Slavemoduls (104) und einen Betriebsmodus der Schaltmittel (202) im zweiten Slavemodul (104) nach einer vordefinierten Zeitdauer nach dem Betreiben eines von dem Normalrelais (204) und dem Notfallrelais (206) im ersten Slavemodul (104) erkennt, dass eine Zwischenverbindung zwischen einem ersten Slavemodul (104) und einem zweiten Slavemodul (104) in einem Leerlaufzustand ist.

6. Notfallmanagementsystem (100) nach einem der Ansprüche 1 bis 5, wobei das Mastermodul (102) zum Erzeugen eines stationären Signals im geschlossenen Kreis (108), Erfassen einer Änderung des stationären Signals im geschlossenen Kreis (108) und Übermitteln eines Abschaltsignals an das Fördersystem zum Stoppen eines Betriebs davon basierend auf der Änderung des stationären Signals konfiguriert ist.

7. Verfahren zum Betreiben eines Notfallmanagementsystems (100), das zur Verwendung in einem Fördersystem nach einem der Ansprüche 1 bis 6 geeignet ist, wobei das Notfallmanagementsystem (100) ein Mastermodul (102) und eine Mehrzahl von Slavemodulen (104) umfasst, wobei das Mastermodul (102) und jedes Slavemodul (104) eine Eingangsklemme (T0) und eine Ausgangsklemme (T1) bereitstellen, derart dass das Mastermodul (102) und die Mehrzahl von Slavemodulen (104) in Reihe miteinander verbunden sind, um einen geschlossenen Kreis (108) zu bilden, wobei das Mastermodul (102) zum Übermitteln eines Steuersignals an mindestens ein Slavemodul (104) konfiguriert ist, und wobei ferner jedes Slavemodul (104) Schaltmittel (202) umfasst, die mindestens einen Eingangsanschluss (I), der mit der Eingangsklemme (T0) verbunden ist, einen Normalausgangsanschluss (NO) und einen Notfallausgangsanschluss (EO) bereitstellen, ein Normalrelais (204), das zum Bereitstellen eines elektrisch leitenden Pfades zwischen dem Normalausgangsanschluss (NO) und der Ausgangsklemme (T1) betrieben werden kann, und ein Notfallrelais (206), das zum Bereitstellen eines elektrisch leitenden Pfades von der Eingangsklemme (T0) zur Ausgangsklemme (T1) betrieben werden kann, wobei das Verfahren umfasst:
(a) Übermitteln (302, 402) des Steuersignals zur Eingangsklemme (T0) mindestens eines Slavemoduls (104),
(b) Erfassen (304, 404) eines Betriebsmodus der Schaltmittel (202), wobei die Schaltmittel (202) in mindestens einem Normalbetriebsmodus und einem Notfallbetriebsmodus betrieben werden können, derart dass ein elektrisch leitender Pfad von dem mindestens einen Eingangsanschluss (I) zum Normalausgangsanschluss (NO) bzw. dem Notfallausgangsanschluss (EO) bereitgestellt wird, wobei basierend auf der Verfügbarkeit des Steuersignals an Normalausgangsanschluss (NO) bzw. dem Notfallausgangsanschluss (EO) erfasst wird, dass die Schaltmittel (202) in einem von dem Normalbetriebsmodus und dem Notfallbetriebsmodus sind,
(c) Übermitteln (306, 406) von Informationen in Bezug auf eine Identität des mindestens einen Slavemoduls (104) und den Betriebsmodus der Schaltmittel (202) an das Mastermodul (102), und
(d) Betreiben (308, 408) des Normalrelais (204), wenn die Schaltmittel (202) im Normalbetriebsmodus funktionieren, und des Notfallrelais (206), wenn die Schaltmittel (202) im Notfallbetriebsmodus funktionieren, derart dass das Steuersignal zur Ausgangsklemme (T1) des mindestens einen Slavemoduls (104) übermittelt wird.

8. Verfahren nach Anspruch 7, ferner umfassend ein sukzessives Ausführen von Schritt (a) bis (d) nach Anspruch 7 für jedes Slavemodul (104) im geschlossenen Kreis (108), derart dass jedes Slavemodul (104) und ein Betriebsmodus der entsprechenden Schaltmittel (202) identifiziert werden.

9. Verfahren nach Anspruch 8, ferner umfassend ein Erkennen (410, 414) mindestens einer Stelle eines Kurzschlusszustands im geschlossenen Kreis (108) und einer Stelle eines Leerlaufzustands im geschlossenen Kreis (108).

10. Verfahren nach Anspruch 9, wobei basierend auf einem Strompegel im geschlossenen Kreis (108), der eine vordefinierte Schwelle überschreitet, nach dem Betreiben eines von dem Normalrelais (204) und dem Notfallrelais (206) im ersten Slavemodul (104) erkannt wird, dass eine Zwischenverbindung zwischen einem ersten Slavemodul (104) und einem zweiten Slavemodul (104) in einem Kurzschlusszustand ist.

11. Verfahren nach Anspruch 9, wobei basierend auf der Nichtverfügbarkeit von Informationen in Bezug auf eine Identität des zweiten Slavemoduls (104) nach einer vordefinierten Zeitdauer nach dem Betreiben eines von dem Normalrelais (204) und dem Notfallrelais (206) im ersten Slavemodul (104) erkannt wird, dass eine Zwischenverbindung zwischen einem ersten Slavemodul (104) und einem zweiten Slavemodul (104) in einem Leerlaufzustand ist.

12. Verfahren nach einem der Ansprüche 7 bis 11, ferner umfassend:
- Erzeugen (502) eines stationären Signals im geschlossenen Kreis (108) basierend auf einem vordefinierten Kriterium,
- Erfassen (504) einer Änderung des stationären Signals im geschlossenen Kreis (108), und
- Übermitteln (506) eines Abschaltsignals an das Fördersystem zum Stoppen eines Betriebs davon basierend auf der Änderung des stationären Signals.

## Revendications

1. Système ( 100 ) de gestion d'urgence propre à être utilisé avec un système de convoyeur, le système ( 100 ) de gestion d'urgence comprenant un module ( 102 ) maître et une pluralité de modules ( 104 ) esclaves, le module ( 102 ) maître et chaque module ( 104 ) esclave procurant une borne ( T0 ) d'entrée et une borne ( T1 ) de sortie, de manière à ce que le module ( 102 ) maître et la pluralité des modules ( 104 ) esclaves soient interconnectés en série pour former une boucle ( 108 ) fermée, le module ( 102 ) maître étant configuré pour procurer un signal de commande à au moins un module ( 104 ) esclave, et chaque module ( 104 ) esclave comprenant :
- des moyens ( 202 ) de commutation procurant au moins un accès ( I ) d'entrée, un accès ( NO ) de sortie normal et un accès ( EO ) de sortie d'urgence, le au moins un accès ( I ) d'entrée étant relié à la borne ( T0 ) d'entrée, et les moyens ( 202 ) de commutation pouvant fonctionner dans au moins un mode de fonctionnement normal et dans un mode de fonctionnement en urgence, de manière à procurer un trajet conducteur de l'électricité allant du au moins un accès ( I ) d'entrée à l'accès ( NO ) de sortie normal et à l'accès ( EO ) de sortie d'urgence respectivement,
- un relais ( 204 ) normal, le relais ( 204 ) normal pouvant fonctionner pour procurer un trajet conducteur de l'électricité entre l'accès ( NO ) de sortie normal et la borne ( T1 ) de sortie,
- un relais ( 206 ) d'urgence, le relais ( 206 ) d'urgence pouvant fonctionner pour procurer un trajet conducteur de l'électricité de la borne ( T0 ) d'entrée à la borne ( T1 ) de sortie et
- des moyens ( 208 ) de commande configurés pour détecter l'un du mode de fonctionnement normal et du mode de fonctionnement en urgence des moyens ( 202 ) de commutation sur la base de la disponibilité du signal de commande à l'accès ( NO ) de sortie normal et à l'accès ( EO ) de sortie d'urgence respectivement, procurant de l'information se rapportant à une identité du module ( 104 ) esclave et au mode de fonctionnement des moyens ( 202 ) de commutation au module ( 102 ) maître, et faisant fonctionner le relais ( 204 ) normal lorsque les moyens ( 202 ) de commutation fonctionnent dans le mode de fonctionnement normal et le relais ( 206 ) d'urgence lorsque les moyens ( 202 ) de commutation fonctionnent dans le mode de fonctionnement d'urgence de manière à procurer le signal de commande à la borne ( T1 ) de sortie du module ( 104 ) esclave.

2. Système ( 100 ) de gestion d'urgence suivant la revendication 1, dans lequel les moyens ( 202 ) de commutation dans au moins un module ( 104 ) esclave sont configurés dans le mode de fonctionnement normal, et dans lequel un signal de commande est procuré à la borne ( T0 ) d'entrée du au moins un module ( 104 ) esclave, les moyens ( 208 ) de commande détectant le signal de commande sur l'accès ( NO ) de sortie normal, procurant de l'information se rapportant à une identité du au moins un module ( 104 ) esclave et au mode de fonctionnement des moyens ( 202 ) de commutation au module ( 102 ) maître et faisant fonctionner le relais ( 204 ) normal pour établir un trajet conducteur de l'électricité entre l'accès ( NO ) de sortie normal et la borne ( T1 ) de sortie, de manière à procurer le signal de commande à la borne ( T1 ) de sortie du au moins un module ( 104 ) esclave.

3. Système ( 100 ) de gestion d'urgence suivant la revendication 1, dans lequel les moyens ( 202 ) de commutation dans au moins un module ( 104 ) esclave sont configurés dans le mode de fonctionnement en urgence, un signal de commande étant procuré à la borne ( T0 ) d'entrée du au moins un module ( 104 ) esclave, des moyens ( 208 ) de commande détectant le signal de commande sur l'accès ( EO ) de sortie d'urgence, procurant de l'information se rapportant à une identité du au moins un module ( 104 ) esclave et au mode de fonctionnement des moyens ( 202 ) de commutation au module ( 102 ) maître et faisant fonctionner le relais ( 206 ) d'urgence pour établir un trajet conducteur de l'électricité entre la borne ( T0 ) d'entrée et la borne ( T1 ) de sortie et de manière à procurer le signal de commande à la borne ( T1 ) de sortie du au moins un module ( 104 ) esclave.

4. Système ( 100 ) de gestion d'urgence suivant l'une quelconque des revendications 2 ou 3, dans lequel le module ( 102 ) maître identifie une interconnexion entre un premier module ( 104 ) esclave et un deuxième module ( 104 ) esclave comme étant dans un état de court-circuit sur la base d'un niveau de courant dans la boucle ( 108 ) fermée dépassant un seuil défini à l'avance, faisant suite au fonctionnement de l'un du relais ( 204 ) normal et du relais ( 206 ) d'urgence du premier module ( 104 ) esclave.

5. Système ( 100 ) de gestion d'urgence suivant l'une quelconque des revendications 2 ou 3, dans lequel le module ( 102 ) maître identifie une interconnexion entre un premier module ( 104 ) esclave et un deuxième module ( 104 ) esclave comme étant dans un état en circuit ouvert sur la base d'une non disponibilité d'information se rapportant à une identité du deuxième module ( 104 ) esclave et un mode de fonctionnement des moyens ( 202 ) de commutation du deuxième module ( 104 ) esclave, après une durée définie à l'avance, faisant suite au fonctionnement de l'un du relais ( 204 ) normal et du relais ( 206 ) d'urgence du premier module ( 104 ) esclave.

6. Système ( 100 ) de gestion d'urgence suivant l'une quelconque des revendications 1 à 5, dans lequel le module ( 102 ) maître est configuré pour établir un signal de régime permanent dans la boucle ( 108 ) fermée, détecter un changement du signal d'état permanent dans la boucle ( 108 ) fermée et procurer un signal d'arrêt au système de convoyeur pour en arrêter le fonctionnement sur la base du changement du signal d'état permanent.

7. Procédé pour faire fonctionner un système ( 100 ) de gestion d'urgence propre à être utilisé avec un système de convoyeur en accord avec l'une quelconque des revendications 1 à 6, le système ( 100 ) de gestion d'urgence comprenant un module ( 102 ) maître et une pluralité de modules ( 104 ) esclaves, le module ( 102 ) maître et chaque module ( 104 ) esclave procurant une borne ( T0 ) d'entrée et une borne ( T1 ) de sortie de manière à interconnecter en série le module ( 102 ) maître et la pluralité de modules ( 104 ) esclaves en une boucle ( 108 ) fermée, le module ( 102 ) maître étant configuré pour procurer un signal de commande au au moins un module ( 104 ) esclave, et en outre chaque module ( 104 ) esclave comprenant des moyens ( 202 ) de commutation procurant au moins un accès ( I ) d'entrée relié à la borne ( T0 ) d'entrée, un accès ( NO ) de sortie normal et un accès ( EO ) de sortie d'urgence, un relais ( 204 ) normal pouvant fonctionner pour procurer un trajet conducteur de l'électricité entre l'accès ( NO ) de sortie normal et la borne ( T1 ) de sortie et un relais ( 206 ) d'urgence pouvant fonctionner pour procurer un trajet conducteur de l'électricité de la borne ( T0 ) d'entrée à la borne ( T1 ) de sortie, procédé dans lequel :
(a) on procure ( 302, 402 ) le signal de commande à la borne ( T0 ) d'entrée d'au moins un module ( 104 ) esclave,
(b) on détecte ( 304, 404 ) un mode de fonctionnement des moyens ( 202 ) de commutation, les moyens ( 202 ) de commutation pouvant fonctionner dans au moins un mode de fonctionnement normal et dans un mode de fonctionnement d'urgence, de manière à procurer un trajet conducteur de l'électricité du au moins un accès ( I ) d'entrée à l'accès ( NO ) de sortie normal et à l'accès ( EO ) de sortie d'urgence respectivement, les moyens ( 202 ) de commutation étant détectés comme étant dans l'un du mode de fonctionnement normal et du mode de fonctionnement en urgence sur la base de la disponibilité du signal de commande à l'accès ( NO ) de sortie normal et à l'accès ( EO ) de sortie d'urgence respectivement,
(c) on procure ( 306, 406 ) de l'information se rapportant à une identité du au moins un module ( 104 ) esclave et au mode de fonctionnement des moyens ( 202 ) de commutation au module ( 102 ) maître et
(d) on fait fonctionner ( 308, 408 ) le relais ( 204 ) normal lorsque les moyens ( 202 ) de commutation fonctionnent dans le mode de fonctionnement normal, et le relais ( 206 ) d'urgence lorsque les moyens ( 202 ) de commutation fonctionnent dans le mode de fonctionnement en urgence, de manière à procurer le signal de commande à la borne ( T1 ) de sortie du au moins un module ( 104 ) esclave.

8. Procédé suivant la revendication 7, dans lequel en outre on effectue successivement les stades (a) à (d) de la revendication 7, pour chaque module ( 104 ) esclave de la boucle ( 108 ) fermée, de manière à identifier chaque module ( 104 ) esclave et un mode de fonctionnement des moyens ( 202 ) de commutation correspondants.

9. Procédé suivant la revendication 8, dans lequel en outre on identifie ( 410, 414 ) au moins l'un d'un endroit d'un état de court-circuit dans la boucle ( 108 ) fermée et d'un endroit d'un état en circuit ouvert dans la boucle ( 108 ) fermée.

10. Procédé suivant la revendication 9, dans lequel on identifie une interconnexion entre un premier module ( 104 ) esclave et un deuxième module ( 104 ) esclave comme étant dans un état de court-circuit sur la base d'un niveau de courant dans la boucle ( 108 ) fermée dépassant un seuil défini à l'avance à la suite du fonctionnement du relais ( 204 ) normal et du relais ( 206 ) d'urgence du premier module ( 104 ) esclave.

11. Procédé suivant la revendication 9, dans lequel on identifie une interconnexion entre un premier module ( 104 ) esclave et un deuxième module ( 104 ) esclave comme étant dans un état en circuit ouvert sur la base d'une non disponibilité d'information se rapportant à une identité du deuxième module ( 104 ) esclave, après une durée définie à l'avance, faisant suite au fonctionnement de l'un du relais ( 204 ) normal et du relais ( 206 ) d'urgence du premier module ( 104 ) esclave.

12. Procédé suivant l'une quelconque des revendications 7 à 11, dans lequel en outre :
- on établit ( 502 ) un signal de régime permanent dans la boucle ( 108 ) fermée sur la base d'un critère défini à l'avance,
- on détecte ( 504 ) un changement du signal d'état permanent dans la boucle ( 108 ) fermée et
- on procure ( 506 ) un signal d'arrêt au système de convoyeur pour en arrêter un fonctionnement sur la base du changement du signal d'état permanent.
